# EUROPÄISCHE PATENTSCHRIFT

(11) **EP 3 466 728 B1**
(45) Veröffentlichungstag und Bekanntmachung des Hinweises auf die Patenterteilung: **14.04.2021**
(21) Anmeldenummer: 18190940.9
(22) Anmeldetag: 27.08.2018
(51) Int. Cl.: B60D 1/06

(54) **ANHÄNGEVORRICHTUNG FÜR EIN KRAFTFAHRZEUG**
TRAILER DEVICE FOR A MOTOR VEHICLE
DISPOSITIF D'ATTELAGE POUR UN VÉHICULE AUTOMOBILE

(30) Priorität: 09.10.2017 DE 202017106105 U
(43) Veröffentlichungstag der Anmeldung: 10.04.2019
(73) Patentinhaber: A. Linnepe GmbH, 58256 Ennepetal (DE)
(72) Erfinder: Hirsch, Florian, 58285 Gevelsberg (DE)
(74) Vertreter: Köchling, Conrad-Joachim

(56) Entgegenhaltungen:
- DE-U1-202017 105 519
- US-A1- 2002 074 773

## Beschreibung

Die Erfindung betrifft eine Anhängevorrichtung zur Befestigung an einem Kraftfahrzeug, insbesondere einem leichten Nutzfahrzeug oder Wohnmobil, aufweisend eine Traverse mit mittig im Verlauf der Länge der Traverse angeordnetem, etwa senkrecht abragendem Kugelkopf zur Aufnahme und Befestigung eines Anhängermauls oder eines Lastenträgersystems.

Derartige Anhängevorrichtungen werden häufig auch als Anhängerkupplung bezeichnet und sind sowohl bei privaten wie auch gewerblichen Kraftfahrzeugen weit verbreitet. Üblicherweise dienen derartige Anhängevorrichtungen dazu, einen Anhänger mit dem Zugfahrzeug, der beispielsweise ein PKW, ein LKW oder ein beliebiges Kraftfahrzeug, wie beispielsweise ein leichtes Nutzfahrzeug oder ein Wohnmobil sein kann, zu verbinden. Im Bereich von PKW, leichten Nutzfahrzeugen oder Wohnmobilen hat sich dabei die sogenannte Kugelkopfkupplung auf dem Markt durchgesetzt und bewährt.

Auf den Kugelkopf einer derartigen Anhängevorrichtung wird als Gegenstück eine an der Deichsel eines Anhängers angeordnete Kugelpfanne als Teil eines sogenannten Anhängermauls auf den Kugelkopf aufgestülpt und kann in dieser Lage dem Zugfahrzeug gelenkig folgen.

In jüngerer Zeit werden derartige Anhängevorrichtungen mit einem Kugelkopf häufig zur Befestigung eines Lastenträgersystems, welches in derselben Art und Weise wie ein Anhänger auf den Kugelkopf aufgestülpt und gegenüber diesem verspannt wird, verwendet. In der Praxis werden derartige Lastenträger häufig als Fahrradträger ausgebildet. Derartige Lastenträger, insbesondere Fahrradträger finden immer größere Verbreitung bei immer weiteren Teilen der Bevölkerung. Aus DE 20 2017 105519 U1 ist ein Lastträgersystem bekannt, das verschwenkbar angeordnet ist, und das an einem Ende mit einem senkrecht abragenden Kugelkopf versehen ist.

Um Beispielsweise an den Inhalt eines Kofferraums eines mit einem derartigen Lasterträgersystem ausgerüsteten Fahrzeugs zu gelangen, sind Lastenträgersysteme bekannt, die nach hinten, also vom Heck des Kraftfahrzeugs weg, verschwenkt werden können, um den Zugang zum Kofferraum oder Laderaum des Kraftfahrzeugs freizugeben.

Dies ist beispielsweise bei den PKW-Typen Limousine und Kombi ausreichend.

Insbesondere bei Fahrzeugen mit Hecktüren mit senkrechter Schwenkachse, die entweder links- oder rechtsseitig oder beidseitig des Kraftfahrzeugs angeordnet sind, ist es nicht möglich, diese zu öffnen, solange ein derartiges Lastenträgersystems auf dem Kugelkopf der Anhängevorrichtung montiert ist. Auch Lastenträgersysteme, die nach hinten verschwenkbar sind, bieten nicht genug Freiraum, um derartige Hecktüren, die häufig beispielsweise an einem leichten Nutzfahrzeug oder einem Wohnmobil ausgebildet sind, öffnen zu können, während das Lastenträgersystem, gegebenenfalls mit Last, montiert ist.

Aufgrund des eingangs genannten Standes der Technik liegt der vorliegenden Erfindung die Aufgabe zugrunde, eine Anhängevorrichtung der eingangs genannten Art zu schaffen, bei der ein Öffnen von Hecktüren und somit der Zugang zum Lade- oder Kofferraum des Kraftfahrzeugs auch bei montiertem Lastenträgersystem, wie beispielsweise einem Fahrradträger mit montierten Fahrrädern, auf schnelle und einfache Art und Weise ohne Zuhilfenahme von Werkzeug, ermöglicht ist.

Zur Lösung dieser Aufgabe schlägt die Erfindung vor, dass die Traverse an oder nahe an ihrem ersten Ende mittelbar oder unmittelbar am Kraftfahrzeug angelenkt und aus einer ersten etwa zum Heck des Kraftfahrzeugs parallelen Lage in eine zweite, etwa zur Längserstreckung des Kraftfahrzeugs parallelen Lage, und zurück in die erste Lage verschwenkbar ist, wobei die Traverse an oder nahe an ihrem zweiten Ende mittelbar oder unmittelbar am Kraftfahrzeug lösbar befestigt oder lösbar befestigbar ist.

Durch die Anordnung einer derartigen, verschwenkbaren Traverse mit Kugelkopf kann zur Öffnung des Kofferraums beziehungsweise des Laderaums eines derartigen Kraftfahrzeugs die Traverse mit samt des daran befestigten Lastenträgersystems, gegebenenfalls mit befestigter Last, wie beispielsweise Fahrrädern, aus der zum Heck des Kraftfahrzeugs parallelen Lage in eine etwa zur Längserstreckung des Kraftfahrzeugs parallele Lage verschwenkt werden. In dieser zur Längserstreckung des Kraftfahrzeugs parallelen Lage kann nun mindestens eine Hecktür mit senkrechter Schwenkachse, in der Praxis häufig beide Türen mit senkrechter Schwenkachse geöffnet werden, um einen bequemen Zugang zum Laderaum des Kraftfahrzeugs zu ermöglichen. Nach dem Verschließen der Hecktür oder der Hecktüren wird die Traverse mit samt des auf dem Kugelkopf befestigten Lasterträgersystems wieder in die erste Lage, in der sich die Traverse etwa parallel zum Heck des Kraftfahrzeugs erstreckt, verstellt und in dieser Lage fixiert.

Dabei ist sowohl die Gelenkseite als auch die zu lösende und wieder zu fixierende Seite derart dimensioniert, dass eine derartige Anhängevorrichtung auf an sich bekannte Art und Weise zum Ziehen von Anhängern und auch zur Aufnahme eines entsprechenden Lastenträgersystems, wie beispielsweise eines Fahrradträgers, Verwendung finden kann. Dies wird dadurch ermöglicht, dass der Kugelkopf mittig im Verlauf der Länge der Traverse angeordnet ist. Dieses Merkmal hat den technischen Effekt, dass die Traverse sich im Wesentlichen über die gesamte Breite des Fahrzeugs erstreckt, was die technische Aufgabe löst, die Stabilität bei eingeschwenkter Traverse zu erhöhen.

Es muss bei einer derartigen Lösung nicht wie bei anderen im Stand der Technik bekannten Lösungen der Kugelkopf entfernt werden, um ein versehentliches Anhängen von Anhängern, die gezogen werden müssen, zu verhindern.

Dabei ist eine derartige Lösung auch von ungeübten Benutzern auf besonders schnelle und einfache Art und Weise bedienbar, da keinerlei Spezialwerkzeug benutzt werden muss.

Insbesondere kann besonders bevorzugt vorgesehen sein, dass die Traverse an oder nahe an ihrem ersten Ende mittels einer ein Gelenk aufweisenden ersten Haltevorrichtung und an oder nahe an ihrem zweiten Ende mittels einer eine Arretiervorrichtung aufweisenden zweiten Haltevorrichtung am Kraftfahrzeug befestigt ist.

Hierbei ist gegebenenfalls die Traverse komplett von den beiden Haltevorrichtungen lösbar, sodass dauerhaft beispielsweise lediglich die Haltevorrichtungen am Kraftfahrzeug verbleiben müssen. Bei Bedarf kann die Traverse mit ihrem ersten Endbereich in die erste Haltevorrichtung eingesteckt und gelenkig mit dieser verbunden werden und je nach gewünschter Lage an der zweiten Haltevorrichtung fixiert werden.

Je nach Wunsch des Verbrauchers kann bei dieser Lösung die Traverse dauerhaft am Kraftfahrzeug verbleiben oder lediglich bei Bedarf Verwendung finden und auf schnelle und einfache Art und Weise mit der ersten und der zweiten Haltevorrichtung verbunden werden, um benutzt werden zu können.

Dabei kann besonders bevorzugt vorgesehen sein, dass die Arretiervorrichtung durch ein händisch betätigbares Schnellverschlusssystem, beispielsweise aufweisend ein händisch gegen die Kraft einer Feder betätigbares, an der zweiten Haltevorrichtung angeordnetes Haltemittel wie einen Dorn oder Stift und eine vom Dorn oder Stift durchgriffene, an der Traverse ausgebildete Ausnehmung, besteht.

Insbesondere durch dieses händisch betätigbare Schnellverschlusssystem ist es dem Benutzer jederzeit ermöglicht, ohne Zuhilfenahme von Spezialwerkzeug die Traverse aus der ersten, etwa zum Heck des Kraftfahrzeugs parallelen Lage in die zweite etwa zur Längserstreckung des Kraftfahrzeugs parallele Lage zu verstellen, um den Zugang zum Laderaum oder Kofferraum des Kraftfahrzeugs zu ermöglichen. Anschießend nach Beladen des Kofferraums kann auf dieselbe einfache und schnelle Art und Weise die Traverse wieder in die erste, also etwa parallel zum Heck des Kraftfahrzeugs angeordnete Lage verschwenkt werden und dort mittels des Schnellverschlusssystems arretiert werden.

Alternativ kann besonders bevorzugt vorgesehen sein, dass die Arretiervorrichtung durch einen an der Traverse ausgebildeten Rastbereich und einen an der zweiten Haltevorrichtung angeordneten Rastvorsprung, der gegen die Kraft einer Feder in der Rastlage gehalten und in eine Freigabelage verstellbar ist, der gegebenenfalls ein weiteres Sicherungsmittel zum gesicherten Verbleib in der Rastlage aufweist, besteht.

Auch die Ausbildung eines derartigen Rastbereichs an dem einen Teil und einem Rastvorsprung an dem anderen Teil, der gegen die Kraft einer Feder in der Rastlage gehalten ist, ermöglicht ein schnelles und einfaches sowohl Lösen der Traverse von der Haltevorrichtung als auch Arretieren beziehungsweise Fixieren der Traverse an der Arretiervorrichtung nach dem Beladen des Fahrzeugs.

Schließlich kann besonders bevorzugt vorgesehen sein, dass die Traverse in der ersten und/oder in der zweiten Lage gegen die Kraft einer Feder gehalten ist.

Hierdurch ist zum einen sichergestellt, dass die in die zweite, also zur Längserstreckung des Kraftfahrzeugs parallele Lage verstellte Traverse nicht versehentlich mit aufgeschwenkter Last gegen die geöffnete Hecktür verschwenken kann und diese gegebenenfalls beschädigen kann und zum anderen ist auch ein ungewolltes Verschwenken aus der ersten in die zweite Lage durch die Federkraft verhindert. Auch ist hierdurch in einer sich nicht mehr in der Arretierlage befindlichen Lage ein ungewolltes beziehungsweise versehentliches Verschwenken und somit Beschädigen von sich hinter dem Lastenträgersystem befindlichen Gegenständen wirksam verhindert.

Ein Ausführungsbeispiel der Erfindung ist in den Figuren dargestellt und im Folgenden näher im Folgenden näher beschrieben.

Es zeigt:

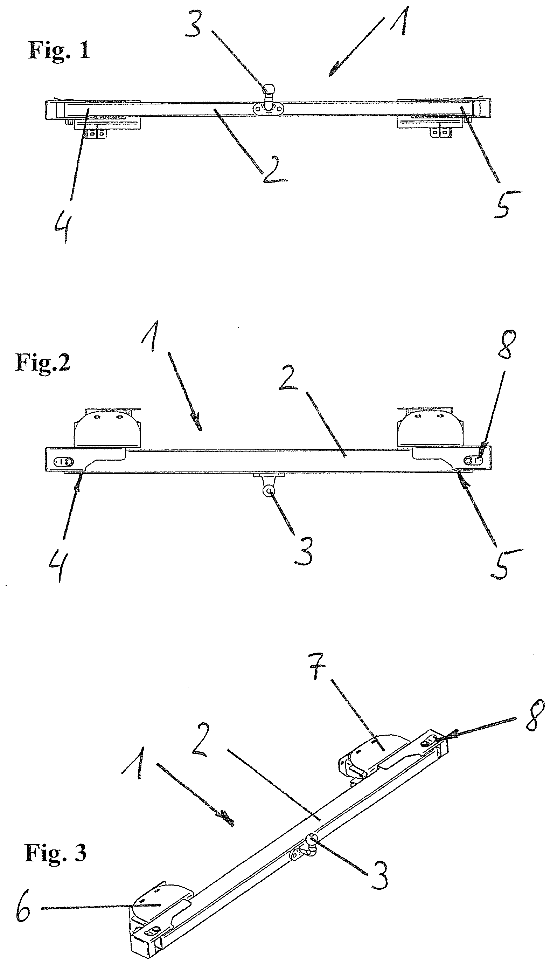

- Figur 1: eine erfindungsgemäße Anhängevorrichtung in erster Lage von vorne gesehen;
- Figur 2: desselben in Draufsicht;
- Figur 3: desselben in Schrägansicht;

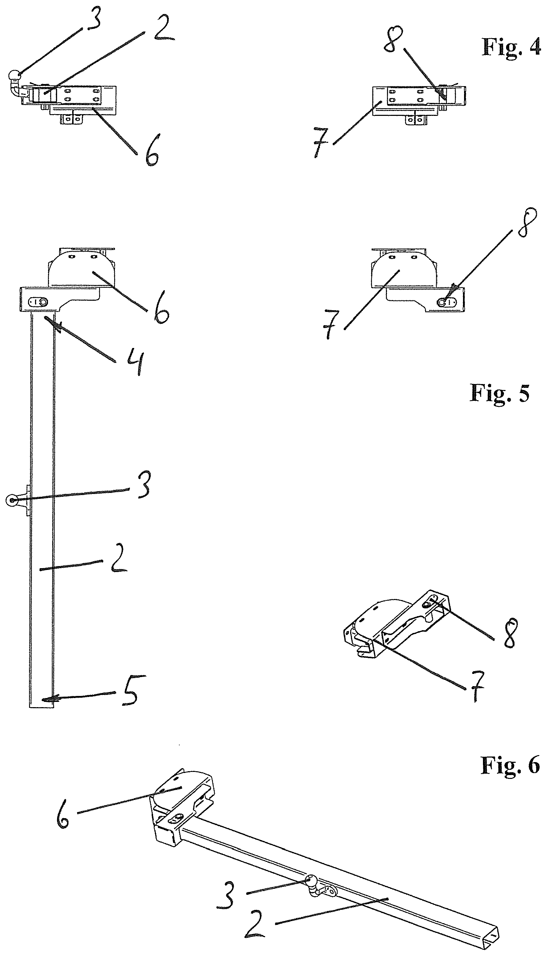

- Figur 4: die Anhängevorrichtung in der zweiten Lage von vorne gesehen;
- Figur 5: desselben in Draufsicht;
- Figur 6: desselben in schräg von oben gesehen.

In den Figuren ist eine Anhängevorrichtung 1 zur Befestigung an einem Kraftfahrzeug wie insbesondere einem leichten Nutzfahrzeug oder Wohnmobil gezeigt. Die Anhängevorrichtung 1 weist zumindest eine Traverse 2 mit mittig im Verlauf der Länge der Traverse 2 angeordnetem und etwa senkrecht nach oben abragendem Kugelkopf 3 auf. Der Kugelkopf 3 dient dabei sowohl zur Aufnahme und Befestigung eines Anhängermauls eines Anhängers als auch eines Lastenträgersystems, wie beispielsweise eines Fahrradträgers.

Erfindungsgemäß ist die Traverse 2 an oder nahe ihrem ersten Ende 4 mittelbar am Kraftfahrzeug angelenkt und aus einer ersten etwa zum Heck des Kraftfahrzeugs parallelen Lage in eine zweite, etwa zur Längserstreckung des Kraftfahrzeugs parallele Lage, und zurück in die erste Lage verschwenkbar. Dabei ist die Traverse 2 an oder nahe ihrem zweiten Ende 5 mittelbar am Kraftfahrzeug lösbar befestigt. Alternativ und in den Figuren nicht gezeigt, kann die Traverse 2 auch unmittelbar mit ihrem ersten Ende 4 und ihrem zweiten Ende 5 am Kraftfahrzeug lösbar befestigbar oder lösbar befestigt sein.

Bei dem in den Figuren gezeigten Ausführungsbeispiel ist die Traverse 2 nahe ihrem ersten Ende 4 mittels einer ein Gelenk aufweisenden ersten Haltevorrichtung 6 und nahe ihres zweiten Endes 5 mittels einer eine Arretiervorrichtung 8 aufweisenden zweiten Haltevorrichtung 7 am Kraftfahrzeug befestigt. Dabei kann die Traverse 2 sowohl zwischen den Lagen verschwenkt werden als auch vollständig aus der ersten und der zweiten Haltevorrichtung 6 beziehungsweise 7 entfernt werden und lediglich dann montiert werden, wenn sie verwendet werden soll.

Die Arretiervorrichtung 8 ist im Ausführungsbeispiel durch ein händisch betätigbares Schnellverschlusssystem gebildet. Dieses weist ein gegen die Kraft einer Feder betätigbares, an der zweiten Haltevorrichtung 7 angeordnetes Haltemittel in Form eines Dorns und eine vom Dorn durchgriffene, an der Traverse 2 ausgebildete Ausnehmung auf. Zur Arretierung an der Arretiervorrichtung 8 muss der Benutzer hierbei lediglich den Dorn durch die Ausnehmung der Traverse 2 führen, um ein dauerhaftes Verbleiben der Traverse 2 an der zweiten Haltevorrichtung 7 sicherzustellen. Dadurch, dass beispielsweise der Dorn gegen die Kraft einer Feder gehalten ist, ist ein dauerhafter Verbleib in der Arretierlage sichergestellt.

Auch ist hierdurch eine Bedienung von einem Benutzer ohne Zuhilfenahme von Fachwerkzeug jederzeit auf schnelle und einfache Art und Weise ermöglicht. Alternativ kann die Arretiervorrichtung 8 auch durch einen an der Traverse 2 ausgebildeten Rastbereich und einen an der zweiten Haltevorrichtung 7 angeordneten Rastvorsprung bestehen. Dabei ist der Rastvorsprung gegen die Kraft einer Feder in der Rastlage gehalten und in eine Freigabelage verstellbar. Zudem kann hierbei gegebenenfalls ein weiteres Sicherungsmittel zum gesicherten Verbleib in der Rastlage, wie beispielsweise ein Sicherungsstift oder ein zusätzlicher Dorn als Sicherungsmittel vorgesehen sein.

Schließlich kann die Traverse 2 sowohl in der ersten als auch in der zweiten Lage gegen die Kraft einer Feder gehalten sein. Hierdurch ist ein versehentliches Verschwenken und dadurch gegebenenfalls ermöglichtes Beschädigen von sich innerhalb des Schwenkraumes befindlichen Gegenständen vermieden.

Bei dem in den Figuren dargestellten Ausführungsbeispiel ist das Gelenk auf der in Fahrzeugrichtung gesehen linken Seite angeordnet. Alternativ ist auch die Anordnung des Gelenks auf der rechten Fahrzeugseite und somit die Anordnung der Arretiervorrichtung 8 auf der linken Fahrzeugseite möglich, um beispielsweise dem Wunsch des Verbrauchers diesbezüglich nachzukommen.

### Bezugszeichenliste:

- 1): Anhängevorrichtung
- 2): Traverse
- 3): Kugelkopf
- 4): erstes Ende von 2
- 5): zweites Ende von 2
- 6): erste Haltevorrichtung
- 7): zweite Haltevorrichtung
- 8): Arretiervorrichtung

## Patentansprüche

1. Anhängevorrichtung (1) zur Befestigung an einem Kraftfahrzeug, insbesondere einem leichten Nutzfahrzeug oder Wohnmobil, aufweisend eine Traverse (2) mit mittig im Verlauf der Länge der Traverse (2) angeordnetem, senkrecht abragendem Kugelkopf (3) zur Aufnahme und Befestigung eines Anhängermauls oder eines Lastenträgersystems,
wobei die Traverse (2) an oder nahe an ihrem ersten Ende (4) mittelbar oder unmittelbar am Kraftfahrzeug angelenkt und aus einer ersten etwa zum Heck des Kraftfahrzeugs parallelen Lage in eine zweite, etwa zur Längserstreckung des Kraftfahrzeugs parallelen Lage, und zurück in die erste Lage verschwenkbar ist, wobei die Traverse (2) an oder nahe an ihrem zweiten Ende (5) mittelbar oder unmittelbar am Kraftfahrzeug lösbar befestigt oder lösbar befestigbar ist.

2. Anhängevorrichtung (1) nach Anspruch 1, wobei die Traverse (2) an oder nahe an ihrem ersten Ende (4) mittels einer ein Gelenk aufweisenden ersten Haltevorrichtung (6) und an oder nahe an ihrem zweiten Ende (5) mittels einer eine Arretiervorrichtung (8) aufweisenden zweiten Haltevorrichtung (7) am Kraftfahrzeug befestigt ist.

3. Anhängevorrichtung (1) nach Anspruch 2, wobei die Arretiervorrichtung (8) durch ein händisch betätigbares Schnellverschlusssystem, beispielsweise aufweisend ein händisch gegen die Kraft einer Feder betätigbares, an der zweiten Haltevorrichtung (7) angeordnetes Haltemittel wie einen Dorn oder Stift und eine vom Dorn oder Stift durchgriffene, an der Traverse (2) ausgebildete Ausnehmung, besteht.

4. Anhängevorrichtung (1) nach Anspruch 2, wobei die Arretiervorrichtung (8) durch einen an der Traverse (2) ausgebildeten Rastbereich und einen an der zweiten Haltevorrichtung (7) angeordneten Rastvorsprung, der gegen die Kraft einer Feder in der Rastlage gehalten und in eine Freigabelage verstellbar ist, der gegebenenfalls ein weiteres Sicherungsmittel zum gesicherten Verbleib in der Rastlage aufweist, besteht.

5. Anhängevorrichtung (1) nach einem der Ansprüche 1 bis 4, wobei die Traverse (2) in der ersten und / oder in der zweiten Lage gegen die Kraft einer Feder gehalten ist.

## Claims

1. A trailer device (1) for attachment at a motor vehicle, in particular a light commercial vehicle or a motorhome, comprising a crossbeam (2) with a tow ball (3) disposed centrally along the length of the crossbeam (2) and protruding vertically, for accommodating and fixing a trailer coupling mouth or of load carrier system,
wherein the crossbeam (2) is articulated at or close to its first end (4) mediately or immediately at the motor vehicle and is pivotable from a first position for instance being parallel to the tail of the motor vehicle into a second position for instance being parallel to the longitudinal extension of the motor vehicle, and back into the first position, wherein the crossbeam (2) is mediately or immediately releasably attached or releasably attachable at or close to its second end (5) at the motor vehicle.

2. The trailer device (1) of claim 1, wherein the crossbeam (2) is attached at the motor vehicle at or close to its first end (4) by means of a first holding device (6) comprising a joint, and at or close to its second end (5) by means of a second holding device (7) comprising a locking device (8) .

3. The trailer device (1) of claim 2, wherein the locking device (8) comprises a manually operable quick-lock system, for instance comprising a manually holding means operable against the force of a spring, disposed at the second holding device (7), such as a mandrel or pin, and a recess formed at the crossbeam (2) and penetrated by the mandrel or pin.

4. The trailer device (1) of claim 2, wherein the locking device (8) comprises a latching portion formed at the crossbeam (2) and a latching projection disposed at the second holding device (7) that is held against the force of a spring in the latching position and is adjustable into a release position, and that, if appropriate, comprises another security element for securely staying in the latching position.

5. The trailer device (1) of one of claims 1 to 4, wherein the crossbeam (2) is held in the first and/or in the second position against the force of a spring.

## Revendications

1. Dispositif d'attelage (1) destiné à être fixé à un véhicule automobile, en particulier un véhicule utilitaire léger ou un camping-car, comprenant une traverse (2) avec une boule (3) disposée centralement dans la course de la longueur de la traverse (2) et faisant saillie verticalement, pour le logement et la fixation d'un crochet d'attelage ou d'un système porte charge,
dans lequel la traverse (2) est articulé à ou près de sa première extrémité (4) médiatement ou immédiatement au véhicule automobile et est articulable à partir d'une première position par exemple en parallèle à l'arrière du véhicule automobile dans une deuxième position par exemple en parallèle à l'étendue longitudinale du véhicule automobile, et en retour dans la première position, dans lequel la traverse (2) est médiatement ou immédiatement fixée ou fixable de manière amovible au véhicule automobile à ou près de sa deuxième extrémité (5) .

2. Dispositif d'attelage (1) selon la revendication 1, dans lequel la traverse (2) est fixée au véhicule automobile à ou près de sa première extrémité (4) au moyen d'un premier dispositif de retenue (6) comprenant une articulation, et à ou près de sa deuxième extrémité (5) au moyen d'un deuxième dispositif de retenue (7) comprenant un dispositif d'arrêt (8).

3. Dispositif d'attelage (1) selon la revendication 2, dans lequel le dispositif d'arrêt (8) comporte un système pour attache rapide à commande manuelle, par exemple comprenant un moyen de retenue à commande manuelle contre la force d'un ressort, disposé au deuxième dispositif de retenue (7), comme un ergot ou une goupille, et un évidement réalisé à la traverse (2) et pénétré par l'ergot ou la goupille.

4. Dispositif d'attelage (1) selon la revendication 2, dans lequel le dispositif d'arrêt (8) comporte une section d'accrochage réalisée à la traverse (2) et une saillie d'accrochage disposée au deuxième dispositif de retenue (7) qui est retenue contre la force d'un ressort dans la position d'accrochage et est ajustable dans une position de libération, et qui, si nécessaire, comporte un autre élément de sécurité pour rester sûrement dans la position d'accrochage.

5. Dispositif d'attelage (1) selon une des revendications 1 à 4, dans lequel la traverse (2) est retenue dans la première et/ou dans la deuxième position contre la force d'un ressort.
